# EUROPEAN PATENT SPECIFICATION

(11) **EP 4 127 031 B1**
(45) Date of publication and mention of the grant of the patent: **12.03.2025**
(21) Application number: 21775357.3
(22) Date of filing: 22.03.2021
(51) Int. Cl.: C08J 5/18, B82Y 30/00, D21F 3/02, D21H 11/18, D21H 19/00, C08L 1/02

(54) **A METHOD FOR PRODUCING A FILM COMPRISING NANOCELLULOSE, AND A FILM COMPRISING NANOCELLULOSE**
VERFAHREN ZUR HERSTELLUNG EINER FOLIE MIT NANOCELLULOSE UND FOLIE MIT NANOCELLULOSE
PROCÉDÉ DE PRODUCTION D'UN FILM COMPRENANT DE LA NANOCELLULOSE ET FILM COMPRENANT DE LA NANOCELLULOSE

(30) Priority: 23.03.2020 SE 2050317
(43) Date of publication of application: 08.02.2023
(73) Proprietor: Stora Enso Oyj, 00101 Helsinki (FI)
(72) Inventor: NYLÉN, Otto, 00420 Helsinki (FI); HEISKANEN, Isto, 55100 Imatra (FI); RAHKO, Joanna, 55120 Imatra (FI); PIHKO, Riku, 40530 Jyväskylä (FI)
(74) Representative: Steinrud, Henrik
(86) International application number: PCT/IB2021/052359
(87) International publication number: WO 2021/191771

(56) References cited:
- WO-A1-2016/042198
- WO-A1-2017/221137
- WO-A1-2019/082031
- WO-A1-2020/095254
- US-A- 4 151 323
- US-A1- 2006 000 567
- US-A1- 2010 124 651
- US-A1- 2014 329 094
- US-A1- 2015 068 973
- US-A1- 2015 275 433

## Description

### Technical field

The present invention relates to a method for producing a film comprising nanocellulose. In addition, the present invention relates to a film comprising nanocellulose obtainable by the method.

### Background

Films comprising a high amount of nanocellulose, such as microfibrillated cellulose (MFC), have been known to have good strength and oxygen barrier properties. This is for example described by Syverud, "Strength and barrier properties of MFC films", Cellulose 2009 16:75-85, where MFC films with a basis weight of between 15-30 gsm were produced and the strength and barrier properties were investigated.

However, during production of nanocellulose films it is not easy to dewater and produce the film at high speed and high energy efficiency due to characteristic properties of nanocellulose. For example, nanocellulose is associated with very good water retention, which provides a high dewatering resistance.

When nanocellulose films are used, for example as barriers, it is crucial that the films do not have pinholes or other defects that negatively would affect the barrier properties. It might also be important that the surface of the nanocellulose film is smooth.

Wet laid techniques can be used for the production of nanocellulose films, i.e. dewatering a furnish comprising nanocellulose on a wire. However, it is difficult to produce a nanocellulose film with good barrier properties and at high production speed by wet laid techniques, in particular if finer grades of nanocellulose are utilized. It is easy to get wire marks which will negatively affect the barrier and optical properties of the film. Furthermore, it is difficult to get a good retention of small fibrils present in the furnish when using a wire.

It is also possible to produce nanocellulose films by using film casting methods, i.e. casting of the film on a non-porous support such as for example a plastic or metal support and then drying the film slowly with, for example, evaporative drying. Casting methods have been shown to produce nanocellulose films with very smooth surfaces with good barrier properties. However, the method is non-economical, slow and inefficient for production in commercial scale. This is above all due to the difficulties to efficiently increase the solids content of the casted film, i.e. fast removal of water or drainage is difficult without disrupting the film (and network) formation. Most importantly, a low solids content at application (casting) combined with evaporative drying causes high energy consumption.

Thus, there is still room for improvements of methods for production of a nanocellulose film with good barrier properties, such as oxygen barrier properties.

### Summary

It is an object of the present invention to provide an improved method for producing a film comprising nanocellulose with good barrier properties, such as oxygen barrier properties, in an efficient way, which method eliminates or alleviates at least some of the disadvantages of the prior art methods.

The invention is defined by the appended independent claims. Embodiments are set forth in the appended dependent claims and in the following description.

The present invention relates to a method for producing a film comprising nanocellulose, wherein the method comprises the steps of:
- providing a suspension comprising between 50 weight-% to 100 weight-% of nanocellulose based on total dry weight,
- forming a fibrous web of said suspension on a non-porous support, wherein said formed fibrous web has a dry content of 1-25% by weight,
- providing a press fabric having a web-side first surface and an opposite second surface, wherein said press fabric comprises at least a woven first fabric layer, wherein said woven first fabric layer is woven of a plurality of yarns, and wherein said woven first fabric layer is arranged in the press fabric as a layer providing said web-side first surface such that said press fabric has a woven surface structure at said web-side first surface,
- applying said web-side first surface of said press fabric into direct contact with said fibrous web,
- wet-pressing said fibrous web by conducting said fibrous web, arranged between said press fabric and said non-porous support, through a pressing equipment, so as to form a dewatered web, and
- drying the dewatered web so as to form said film.

It has surprisingly been found that it is possible to dewater a web, which comprises a high amount of nanocellulose, formed on a non-porous support by applying a web-side first surface of a press fabric comprising a woven first fabric layer, which woven first fabric layer is arranged in the press fabric as a layer providing the web-side first surface such that the press fabric has a woven surface structure at the web-side first surface, into contact with the web prior to conducting it through a pressing equipment.

Thus, it has surprisingly been found that it is possible to dewater a web, which comprises a high amount of nanocellulose, formed on a non-porous support by applying a woven surface structure of a press fabric into direct contact with the fibrous web prior to conducting it through a pressing equipment. Accordingly, it has surprisingly been found that it is possible to dewater a web comprising a high amount of nanocellulose and produce a film by the method according to the present disclosure, i.e. it is possible to obtain a continuous film by the method according to the present disclosure.

More specifically, it has surprisingly been found that it is possible to dewater a web comprising a high amount of nanocellulose by the method according to the present disclosure without the fibrous web getting partly or completely stuck to the press fabric. Thereby, formation of holes, pinholes or other damage to the fibrous web may be prevented. Thus, in this way it is possible to dewater the fibrous web in an efficient way which leads to that the dewatering speed can be increased at the same time as the produced film will have good barrier properties.

As mentioned above, the first fabric layer is woven, i.e. it is a woven first fabric layer. The woven first fabric layer comprises no batt (i.e. no batting material) or other filling material.

Furthermore, as mentioned above the woven first fabric layer is arranged in the press fabric as a layer providing the web-side first surface such that the press fabric has a woven surface structure at the web-side first surface. Thus, no batt surface layer (or other surface layer) is arranged on the surface of the first fabric layer constituting the web-side first surface of the press fabric. However, one or more batt surface layers (or other surface layers) may be arranged on the surface of the first fabric layer opposite the web-side first surface.

In some embodiments, the plurality of yarns of the woven first fabric layer comprises polymeric yarns. Thus, the woven first fabric layer may comprise a woven structure which is woven of a plurality of polymeric yarns.

The plurality of yarns may comprise polymeric yarns of at least one synthetic polymer selected from the group of synthetic polymers consisting of: polyamides, polyurethanes, polyesters, polyaramides, polyimides, polyolefins, polyether ketones, polypropylene, polyethylene terephthalate (PET), polyethers, polybutylene terephthalate (PBT), polyurea and copolymers thereof.

In some embodiments, the plurality of polymeric yarns comprises at least yarns of a first synthetic polymer selected from the group of synthetic polymers consisting of: polyamides, polyurethanes, polyesters, polyaramides, polyimides, polyolefins, polyether ketones, polypropylene, polyethylene terephthalate (PET), polyethers, polybutylene terephthalate (PBT), polyurea and copolymers thereof. For example, the plurality of polymeric yarns may comprise polyester yarns or polypropylene yarns.

In some embodiments, the plurality of polymeric yarns comprises at least yarns of a first synthetic polymer and yarns of a second synthetic polymer, wherein the first and second synthetic polymers are selected from the group of synthetic polymers consisting of: polyamides, polyurethanes, polyesters, polyaramides, polyimides, polyolefins, polyether ketones, polypropylene, polyethylene terephthalate (PET), polyethers, polybutylene terephthalate (PBT), polyurea and copolymers thereof. For example, the plurality of polymeric yarns may comprise polyester yarns and polypropylene yarns.

For example, at least 80% of the yarns, preferably at least 90% of the yarns, may be polyester or polypropylene yarns.

By using yarns of a synthetic polymer, the smoothness of the formed film may be further improved. Using yarns of a synthetic polymer may also be advantageous for the durability and/or elasticity of the press fabric.

In some embodiments, the weave pattern of the woven first fabric layer is satin weave, plain weave or twill weave

In some embodiments, the plurality of yarns are multifilament yarns. By using multifilament yarns, the smoothness of the surface of the woven first fabric layer to be applied into direct contact with the fibrous web (i.e. the web-side first surface of the press fabric) may be improved.

In some embodiments, the woven first fabric layer is woven of yarns having a denier less than 6000, preferably less than 5000, most preferably less than 4000, and the woven first fabric layer has a weft density of more than 5 cm⁻¹, preferably more than 10 cm⁻¹, more preferably more than 15 cm⁻¹, most preferably more than 20 cm⁻¹ and a warp density of more than 20 cm⁻¹, preferably more than 30 cm⁻¹, more preferably more than 40 cm⁻¹. Usage of yarns having a denier within the specified range and usage of a weft density and a warp density, respectively, within the specified ranges imply that a dense woven structure of the woven first fabric layer is obtained, i.e. a dense woven surface structure at the web-side surface of the press fabric is also obtained.

Especially in the beginning of the pressing, the nanocellulose containing fibrous web is in a gel-like state, having shear thinning behavior. It has been found that a dense surface structure of the press fabric according to the above improves the prevention of material in the fibrous web from penetrating into pores and openings of the press fabric. Thereby, it is further prevented that the fibrous web gets partly or completely stuck to the press fabric, causing holes, pinholes or other damage of the fibrous web. Furthermore, if the fibrous web gets stuck to the press fabric, it can partly or completely be separated from the support at the point where the press fabric should be separated from the fibrous web. Accordingly, by using a dense surface structure in accordance with the above the efficiency of the dewatering of the fibrous web may be further improved at the same time as the barrier properties of the produced film may be further improved.

In some embodiments, a supportive arrangement is arranged on the second surface of the press fabric. The supportive arrangement comprises one or more batt material layers and/or one or more supportive fabrics and/or one or more press felts. For example, the supportive arrangement may consist of a press felt. The inclusion of a supportive arrangement may result in a press fabric arrangement which is associated with improved strength, elasticity, resilience, compressibility and water-holding capacity.

In some embodiments, the fibrous web is formed by casting, such as cast coating. It was surprisingly found that by the method according to the present disclosure it is possible to increase the dewatering of a cast coated suspension on a support.

Consequently, the method according to the present disclosure makes it possible to produce a good barrier property film at high speed by the use of casting.

In some embodiments, the pressure used in the pressing equipment is between 0.1-150 bar. It is preferred that the pressure used in the pressing equipment is gradually increased during the treatment in the pressing equipment. By gradual or stepwise increase of the pressure in the pressing equipment the dewatering of the web is improved, i.e. a web with a higher dry content can be produced without destroying the barrier properties of the final film.

The pressing equipment is preferably a belt press or extended shoe press design and the non-porous support is preferably a metal support, such as a metal belt. Alternatively, the non-porous support may be a polymer/plastic support.

The fibrous wet web is preferably heated before the press fabric is applied into contact. In this way the temperature and the solids content of the fibrous web is increased which further improves the subsequent dewatering of the fibrous web. In some embodiments, the fibrous wet web has a temperature of 10-99°C when entering the wet-pressing. By increasing the temperature of the fibrous wet web, the viscosity of water can be lowered, which will aid the dewatering action. By increasing the solids content of the wet web before the wet pressing section, the surface of the fibrous wet web, coming into contact with the web-side first surface of the press fabric, or the whole fibrous web becomes more viscous and its penetration into pores of the press fabric can be reduced or avoided.

In some embodiments, the fibrous web has a dry content of 3-25% by weight when entering the wet-pressing.

In some embodiments, the fibrous web has a dry content of 15-80% by weight after dewatering in the pressing equipment.

In some embodiments, the step of applying the web-side first surface of the press fabric into direct contact with the fibrous web is preceded by a step of pre-drying the fibrous web. In some embodiments, the step of pre-drying the fibrous web comprises drying the fibrous web by heating so that the dry content of the fibrous web is increased at least 1% by weight by evaporation before the step of applying the web-side first surface of the press fabric into direct contact with the fibrous web. Thus, in these embodiments, the fibrous web is pre-dried after formation of the fibrous web on the non-porous support but before application of the press fabric. For example, the heating may be performed by heating the non-porous support, i.e. a heated non-porous support may be utilized in the pre-drying step.

In some embodiments, the method further comprises a step of smoothing of said dewatered web in a smoothing press.

The present invention further relates to a film comprising nanocellulose obtainable by the method described above.

In some embodiments, the film obtained by the method of the present disclosure has ≤ 1 pinhole/m² according to EN13676:2001 when being uncoated and having a grammage of 10-60 gsm.

The film obtained by the method of the present disclosure may have an Oxygen Transmission Rate (OTR) value at 23°C, 50% RH (relative humidity), below 10 cc/m²/24h, preferably below 5 cc/m²/24h, most preferably below 3 cc/m²/24h according to ASTM D-3985. The film obtained by the method of the present disclosure may have a grammage of 10-60 gsm, preferably 15-50 gsm, when dry and may have a thickness of 10-60 µm, preferably 15-50 µm, when dry. The film obtained by the method of the present disclosure may have a transparency over 80% according to DIN 53147. It is consequently possible to produce a thin film comprising high amounts of nanocellulose that has good oxygen barrier properties, such as an oxygen barrier film, by the method of the present disclosure.

### Detailed description

A method for producing a film comprising nanocellulose is provided, wherein the method comprises the steps of:
- providing a suspension comprising between 50 weight-% to 100 weight-% of nanocellulose based on total dry weight,
- forming a fibrous web of said suspension on a non-porous support, wherein said formed fibrous web has a dry content of 1-25% by weight,
- providing a press fabric having a web-side first surface and an opposite second surface, wherein said press fabric comprises at least a woven first fabric layer, wherein said woven first fabric layer is woven of a plurality of yarns, and wherein said woven first fabric layer is arranged in the press fabric as a layer providing said web-side first surface such that said press fabric has a woven surface structure at said web-side first surface,
- applying said web-side first surface of said press fabric into direct contact with said fibrous web,
- wet-pressing said fibrous web by conducting said fibrous web, arranged between said press fabric and said non-porous support, through a pressing equipment, so as to form a dewatered web, and
- drying the dewatered web so as to form said film.

It has surprisingly been found that it is possible to dewater a web comprising a high amount of nanocellulose formed on a non-porous support in an improved way by applying a press fabric comprising a woven surface structure at a web-side surface into direct contact with the web followed by conducting the web to a pressing equipment. As mentioned above, the press fabric comprises at least a woven first fabric layer, wherein the woven first fabric layer is woven of a plurality of yarns, and wherein the woven first fabric layer is arranged in the press fabric as a layer providing the web-side first surface such that the press fabric has a woven surface structure at the web-side first surface. The web-side first surface of the press fabric, i.e. the woven surface structure, is applied into direct contact with the fibrous web, and the fibrous web, arranged between the press fabric and a non-porous support, is conducted through the pressing equipment.

By the method according to the invention it is possible to dewater the web in a good and very efficient way and still be able to produce a film from the dewatered fibrous web having good barrier properties. It has surprisingly been found that the use of a press fabric with a woven surface structure at the web-side surface followed by treatment in a pressing equipment made it possible to dewater the web comprising high amounts of nanocellulose at an increased production speed (e.g. compared to use of evaporative drying) without deteriorating the barrier properties of the web or produced film.

Furthermore, it was surprisingly found that the woven surface structure (and the remainder of the woven first fabric layer) of the press fabric does not negatively affect the dewatering efficiency of the press fabric, i.e. it is able to pass water such that a nanocellulose web is successfully dewatered in a pressing action.

Also, it was surprisingly found that clogging of the woven surface structure (and the remainder of the woven first fabric layer) of the press fabric by nanocellulose is limited or avoided. Thus, dewatering of the fibrous web without the fibrils of the nanocellulose at least substantially moving into the press fabric and causing clogging of the press fabric is enabled. Avoidance of clogging of the press fabric implies that the washing requirements of the press fabric are reduced.

The dewatering of a web comprising high amounts of nanocellulose is one of the most challenging process steps in order to produce a film with good barrier properties, i.e. to produce a product with a limited number of defects, such as pinholes or other irregularities, that will affect the barrier properties of the product. Consequently, it is important that the dewatering is done in a good way to avoid poor barrier properties. It has thus been very difficult to be able to increase the production speed of the dewatering step of a web comprising high amounts of nanocellulose without deteriorating the barrier properties.

As mentioned above, the suspension comprises between 50 weight-% to 100 weight-%, preferably between 70 weight-% to 100 weight-%, of nanocellulose based on total dry weight. Thus, a film produced from the dewatered fibrous web comprises a high amount of nanocellulose, preferably between 70-100 % by weight of nanocellulose, this relates to the amount of nanocellulose in the film per se before eventual coating layers have been added.

As mentioned above, the fibrous web is formed on a non-porous support on which the fibrous web is conducted through the pressing equipment. Preferably, the fibrous web is formed on the support by casting, such as cast coating, the suspension onto the support. However, alternatively, the fibrous web could be formed on the support by any other conventional coating technique in the art, such as blade, spray, rod or curtain coating.

It was surprisingly found that by the method according to the present disclosure it is possible to increase the dewatering of a casted suspension on a support. Consequently, the method according to the present disclosure makes it possible to produce a smooth and good barrier property film at high speed by the use of casting.

Thus, the method disclosed herein enables higher operation speeds on a casting line, reduction of casting line dryer length and significant energy savings in drying energy consumption at the same time as good barrier properties of the produced film are provided (i.e. not deteriorated).

It is important to apply the suspension to the support in such a way that a homogeneous fibrous web is formed, meaning that the fibrous web should be as uniform as possible with as even thickness as possible etc. The thickness of the applied fibrous web may be, for example, 40-6000 µm or 60-3000 µm or 70-2000 µm or 100-2000 µm at application. The formed fibrous web has a dry content of 1-25% by weight, preferably 2-20 % by weight, most preferably 3-15 % by weight, at formation (i.e. during application on the support or immediately after application on the support).

The support (substrate) on which the fibrous web is formed is a non-porous support. It has preferably a smooth surface and may be a polymer/plastic support or metal support. Preferably, the support is a metal support, i.e. the support is made from metal. For example, the metal support is a metal belt. The metal support is preferably heated to a temperature above 30 °C, preferably between 30-150 °C, more preferably between 45-150 °C, even more preferred between 60-100 °C before or immediately after the web is applied to the support. By increasing the temperature of the support and thus on the applied web it has been found possible to further increase the efficiency of the dewatering of the web in the pressing equipment.

With press fabric is meant a fabric that is permeable and allows water to be removed from the web either by absorbing the water or by allowing the water to be removed through the fabric.

As mentioned above the press fabric utilized in the method according to the present disclosure comprises a web-side first surface and an opposite second surface. The web-side first surface of the press fabric is the surface of the press fabric intended to be in contact with the fibrous web to be dewatered.

Furthermore, the press fabric comprises at least a first fabric layer which is woven, i.e. it comprises a woven first fabric layer. The woven first fabric layer comprises no batt (i.e. no batting material) or other filling material. Thus, the woven structure of the first fabric layer is a woven structure without batting material or other filling material. Accordingly, the surface structure of the woven first fabric layer, which is to be applied in direct contact with the fibrous web, comprises no batting material or other filling material. The woven first fabric layer is arranged in the press fabric as a layer providing the web-side first surface such that the press fabric has a woven surface structure at the web-side first surface. Thus, the woven first fabric layer constitutes a layer of the press fabric which provides the web-side surface structure, i.e. it is arranged such that one of its surfaces constitute the web-side first surface, which is the outer surface of the press fabric arranged to contact the fibrous web.

Accordingly, the press fabric may be constituted by one layer, i.e. the woven first fabric layer. Thus, in one embodiment the press fabric consists of the woven first fabric layer. In this embodiment, the woven first fabric layer provides both the web-side first surface and the opposite second surface of the press fabric, i.e. the web-side first surface of the press fabric is constituted by one surface of the woven first fabric layer and the opposite second surface of the press fabric is constituted by the other opposite surface of the woven first fabric layer.

However, alternatively, the press fabric may comprise one or more further fabric layers and/or one or more batt material layers in addition to the first fabric layer. The layers of the press fabric may then be interwoven or arranged in a laminated or composite construction. The one or more further fabric layers and/or one or more batt material layers are then arranged such that the woven first fabric layer is positioned as an outermost layer, i.e. such that it provides the web-side first surface. One or more of the further fabric layers may have the same properties as the woven first fabric layer. Alternatively, the one or more further fabric layers may have different properties than the first fabric layer and may be of any suitable press fabric material. One or more of the further fabric layers may be woven layers but may alternatively have a woven or nonwoven base with batt of synthetic batting material. If one or more further fabric layers are woven, they may have different properties than the woven first fabric layer, e.g. be of a different weave pattern and/or of a different material.

The woven first fabric layer is woven of a plurality of yarns, which may comprise or consist of polymeric yarns. Thus, it may be woven of a plurality of polymeric yarns, i.e. it may comprise or consist of a woven structure which is woven of a plurality of polymeric yarns.

Furthermore, the polymeric yarns may be yarns of one or more synthetic polymer. Thus, the woven first fabric layer may be woven of yarns of one or more synthetic polymer, i.e. the woven first fabric layer may comprise or consist of a woven structure of yarns of one or more synthetic polymer. For example, the woven first fabric layer may be woven of yarns of only one type of synthetic polymer. However, alternatively the woven first fabric layer may be woven of yarns of two or more (such as three, four, five, etc.) different synthetic polymers, i.e. it may be woven of at least yarns of a first synthetic polymer and yarns of a second synthetic polymer.

The synthetic polymer(s) may be any known suitable synthetic polymers used for yarns of paper machine fabrics. For example, the synthetic polymer(s) may be selected from the group of synthetic polymers consisting of: polyamides, polyurethanes, polyesters, polyaramides, polyimides, polyolefins, polyether ketones, polypropylene, polyethylene terephthalate (PET), polyethers, polybutylene terephthalate (PBT), polyurea and copolymers thereof. Preferably, the synthetic polymer is polyester or polypropylene. Alternatively, cotton or rayon could be used as material for the yarns.

Accordingly, the woven first fabric layer may be woven of, for example, polyester yarns or polypropylene yarns. Alternatively, the woven first fabric layer may be woven of, for example, a combination of polyester yarns and polypropylene yarns, a combination of polyester yarns and yarns of one or more other synthetic polymers of the group mentioned above, or a combination of polypropylene yarns and yarns of one or more other synthetic polymers of the group mentioned above. For example, at least 80% of the yarns, preferably at least 90% of the yarns, are polyester yarns or polypropylene yarns.

The woven first fabric layer may be woven of longitudinal and transverse yarns. The weave pattern of the woven first fabric layer may be of any suitable weave, e.g. it may be a satin weave, plain weave or a twill weave.

The woven first fabric layer may be woven endless, or flat woven and joined, or made, into endless form with a seam or other technique known in the art for placing fabrics into endless form.

Preferably, the plurality of yarns of the woven first fabric layer are multifilament yarns. The filaments of the individual multifilament yarns are preferably of the same material, e.g. the same synthetic polymer, such that each individual yarn only comprises one material, e.g. one synthetic polymer. Alternatively, however, the filaments of the individual multifilament yarns may be of two or more different materials, e.g. two or more different synthetic polymers. Still alternatively, the yarns of the woven first fabric layer may be monofilament yarns.

In one embodiment, the weave pattern of the woven first fabric layer is satin weave and at least 80% of the yarns, preferably at least 90% of the yarns, are polyester or polypropylene yarns. Thus, in this embodiment at least 80% of the yarns or at least 90% of the yarns or 100% of the yarns may be of polyester. Alternatively, at least 80% of the yarns or at least 90% of the yarns or 100% of the yarns may be of polypropylene. Still alternatively, at least 80% of the yarns or at least 90% of the yarns or 100% of the yarns may be of either polyester or polypropylene (i.e. yarns of polyester and yarns of polypropylene are present). The yarns are preferably multifilament yarns in this embodiment.

In one embodiment, the weave pattern of the woven first fabric layer is plain weave and at least 80% of the yarns, preferably at least 90% of the yarns, are polyester or polypropylene yarns. Thus, in this embodiment at least 80% of the yarns or at least 90% of the yarns or 100% of the yarns may be of polyester. Alternatively, at least 80% of the yarns or at least 90% of the yarns or 100% of the yarns may be of polypropylene. Still alternatively, at least 80% of the yarns or at least 90% of the yarns or 100% of the yarns may be of either polyester or polypropylene (i.e. yarns of polyester and yarns of polypropylene are present). The yarns are preferably multifilament yarns in this embodiment.

Preferably, the yarn denier, the weft density and the warp density of the woven first fabric layer are selected such that a dense woven structure is provided. For example, the woven first fabric layer may be woven of yarns having a denier less than 6000, preferably less than 5000, more preferably less than 4000. Preferably, the denier is above 10, most preferably above 20. The weft density may be more than 5 cm⁻¹, preferably more than 10 cm⁻¹, more preferably more than 15 cm⁻¹, most preferably more than 20 and the warp density may be more than 20 cm⁻¹, preferably more than 30 cm⁻¹, most preferably more than 40 cm⁻¹. Usage of yarns having a denier within the specified range and usage of a weft density and a warp density, respectively, within the specified ranges imply that a dense woven structure is obtained, i.e. a dense surface structure at the web-side surface is also obtained.

The thickness of the woven first fabric layer may be, for example, 0.05-2 mm or preferably 0.1-1 mm.

For example, the basis weight of the woven first fabric layer may be 30-1900 g/m² or 60-1400 g/m².

Furthermore, a supportive arrangement may be arranged on the second surface of the press fabric. The supportive arrangement may be arranged on the second surface of the press fabric before, after or at the time of application of the press fabric in contact with the fibrous web. In some embodiments, the supportive arrangement is attached to the second surface of the press fabric, such as in a laminated or composite construction. The supportive arrangement may comprise one or more batt material layers and/or supportive fabrics and/or one or more press felts. The one or more supportive fabrics may correspond to the press fabric above, i.e. the press fabric comprising the woven first fabric layer, or may have different properties. The supportive fabric(s) may be constituted by any suitable fabric. If there are more than one supportive fabric, they may be the same or different.

With press felt is meant a felt that is permeable and allows water to be removed from the web either by absorbing the water or by allowing the water to be removed through the felt. Any known press felt can be used, e.g. a press felt used for dewatering paper or paperboard webs. The press felt may have a woven or nonwoven base with batt of batting material, e.g. synthetic batting material.

In one embodiment, the supportive arrangement consists of a press felt, i.e. a press felt is arranged on or attached to the second surface of the press fabric. In one embodiment, the supportive arrangement consists of a supportive fabric and a press felt, wherein the press felt preferably is arranged as an outermost layer.

The press fabric is preferably applied to the fibrous web, i.e. in direct contact to the fibrous web, at least 20 cm before being conducted through the pressing equipment. It is preferred that the press fabric is applied to the fibrous web at a distance between 20 cm to 5 meters, even more preferable between 50 cm to 3 meters before the fibrous web is conducted through the pressing equipment. It is preferred that no external pressure is used on the press fabric when applied to the fibrous web before being conducted through the pressing equipment. It may be possible to wrap the support, the fibrous web and the press fabric around a roll and in this way create a small dewatering pressure but it is important not to use too high pressure and no pressure by the use of a nip roll/s can be used. By combining the use of a press fabric according to the present disclosure at a distance before increasing the dewatering in a pressing equipment, the dewatering of the web may be improved and clogging of the press fabric by fibrils of the nanocellulose moving into the press fabric may be further counteracted. In addition, it may then be possible to increase the pressure used in the pressing equipment and to increase the speed of the dewatering process.

With pressing equipment is meant an equipment forming a nip through which the fibrous web is conducted and thus pressed and dewatered. The pressing equipment preferably comprises an extended nip and it is preferred that the pressing equipment is a belt press. The belt press comprises a metal belt and a roll and the dewatering of the web is done by applying the web and the press fabric between the metal belt and the roll. It may be preferred to increase the length of the nip by treating the fibrous web in the belt press for a distance of at least 20% of the diameter of the roll of the belt press. It was found that it is possible to increase the nip length of the dewatering of the fibrous web and still be able to increase the dewatering speed without deteriorating the barrier properties of the film produced from the web. The pressing equipment may comprise more than one nip.

The pressure used in the pressing equipment is preferably between 0.1-150 bar, preferably between 0.5-100 bar, even more preferred between 1-60 bar and even more preferred between 1-50 bar. It may be preferred to gradually increase the pressure in the pressing equipment. It is preferred to use a pressure between 0.5-10 bar in the beginning of the pressing equipment and gradually increase the pressure to 5-20 bar and thereafter optionally further increase the pressure to 10-20 bar followed by optionally increasing the pressure to between 20-50 bar. The increased pressure may be done in the same pressure nip, e.g. in an extended nip or the pressing equipment may comprise more than one nips.

The web is preferably conducted through the pressing equipment at a speed of at least 20 m/min, preferably above 100 m/min and even more preferably above 200 m/min for the wet-pressing. With the present invention it was found possible to increase the production speed for dewatering a fibrous web comprising high amounts of nanocellulose at the same time as good barrier properties of the produced film are provided. Consequently, since the dewatering often is the most challenging process step for the production of a nanocellulose film having good barrier properties, the production speed of the entire film can also be improved, and it makes it possible to produce a nanocellulose film with good barrier properties in a much more cost-efficient way.

One or more pressing sections with pressing equipment may be utilized. Thus, more than one press fabric according to the present disclosure may be utilized, such as two press fabrics in different pressing sections. If more than one press fabric is utilized, the different press fabrics may be the same or different. For example, the first press fabric may have a low water permeability whereas the second press fabric may have high water absorption properties.

The fibrous web is preferably heated before the press fabric is applied into contact. In this way the temperature and the solids content of the fibrous web is increased which further improves the subsequent dewatering of the fibrous web. The increased heat may be applied using any known way. The fibrous web is preferably heated to a temperature of 10-99°C, preferably between 50-95°C.

The dry content of the fibrous web when entering wet-pressing is preferably 3-25% by weight, more preferably 4-20% by weight, most preferably 5-15% by weight. The dry content of the fibrous web after dewatering in the pressing equipment is preferably between 15-80% by weight, more preferably 20-60% by weight.

After dewatering in the pressing equipment, the dewatered web is dried so as to form the film. The drying of the dewatered web may comprise drying and/or further dewatering in any conventional way, e.g. by additional pressing or conventional cylinder drying, by using vacuum and/or by the use of hot air, in order for it to have the appropriate dry content. The film preferably has a dry content above 95% by weight. It may also be possible to treat the dewatered web in any way known to a person skilled in the art in order to produce a film, e.g. by calendering.

After dewatering in the pressing equipment, a smoothing press may optionally be used to remove any press fabric markings on the dewatered web and thus improve the smoothness. The smoothing press may be a non-felted nip. The smoothing by means of a smoothing press may be performed before the drying step, i.e. the dewatered web may be smoothened before the drying. Alternatively, the smoothing by means of a smoothing press may be performed between drying sub-steps of the drying step. For example, the drying step may comprise a first drying sub-step and a second drying sub-step, wherein the smoothing may be performed between the first and second drying sub-step.

The film provided after drying of the dewatered web may have an Oxygen Transmission Rate (OTR) value at 23°C, 50% RH, below 10 cc/m²/24h, preferably below 5 cc/m²/24h, most preferably below 3 cc/m²/24h according to ASTM D-3985. The grammage of the provided dried film may be 10-60 gsm, preferably 15-50 gsm. The thickness of the provided dried film may be 10-60 µm, preferably 15-50 µm, when dry. The thickness of the film can be selected dependent on the required properties. The formed film is preferably a thin translucent or transparent film, with a high smoothness and good barrier properties (e.g. gas/oxygen, aroma, light, etc.).

The press fabric may be cleaned and dewatered after being conducted through the pressing equipment and separated from the dewatered web.

The step of applying the web-side first surface of the press fabric into direct contact with the fibrous web may be preceded by a step of pre-drying the fibrous web. Thus, a step of pre-drying the fibrous web may be performed after formation of the fibrous web on the support but before application of the press fabric. Depending on the dry content the pre-drying step may be necessary to perform. For example, the pre-drying step may be necessary to perform when the dry content is 1-25% by weight, or 3-15% by weight or 3-10% by weight. For example, the pre-drying may be performed by evaporation, impingement drying with hot air, IR, microwaves, thermal heating or any other method well known in the art.

For example, the step of pre-drying the fibrous web may comprise drying the fibrous web by heating so that the dry content of the fibrous web is increased at least 1% by weight by evaporation before the step of applying the web-side first surface of the press fabric into direct contact with the fibrous web. Then the fibrous web is pre-dried after formation of the fibrous web on the non-porous support but before application of the press fabric. For example, the heating may be performed by heating the non-porous support, i.e. a heated non-porous support may be utilized in the pre-drying step.

With film is herein meant a thin substrate with good gas, aroma or grease or oil barrier properties, preferably oxygen barrier properties, such as oxygen barrier properties according to the above OTR value.

Besides nanocellulose, the suspension and thus the resulting film may also comprise longer cellulosic fibers, either hardwood or softwood fibers, preferably kraft pulp softwood fibers. The film may also comprise other additives, such as pigments, plasticizers, humectants, viscosity modifiers, carboxymethylcellulose (CMC), retention chemicals, starch etc. The film may comprise minerals, such as clays and preferably bentonite. It may be preferred that the film comprises 1-50% by weight, more preferably 2-30% by weight of bentonite. By increasing the bentonite content of the film it was found possible to increase the dry content of the web. The additives may be comprised in the suspension used for forming the fibrous web or be added to the fibrous web after forming.

The method of the present disclosure may further comprise a step of peeling off the formed film from the substrate after the drying step, preferably at a dryness of < 20% by weight. A free-standing film is thereby formed. Thus, the method of the present disclosure may be a method for production of a free-standing nanocellulose film.

As mentioned above, the support on which the fibrous web is formed may be a metal or plastic support. Then the method may further comprise a step of peeling off the formed film from the support so as to provide a free-standing nanocellulose film.

The present invention also relates to a film comprising nanocellulose obtained by the method described above. The film preferably has an Oxygen Transmission Rate (OTR) value at 23°C, 50% RH, below 10 cc/m²/24h, preferably below 5 cc/m²/24h, most preferably below 3 cc/m²/24h according to ASTM D-3985. The film preferably has a grammage of 10-60 gsm, more preferably 15-50 gsm, when dry. The thickness of the film is preferably 10-60 µm, more preferably 15-50 µm, when dry. The thickness of the film can be selected dependent on the required properties. The film according to the present invention is preferably a thin translucent or transparent film, with a high smoothness and good barrier properties (e.g. gas/oxygen, aroma, light, etc.). The film may have a transparency over 80% according to DIN 53147. Preferably, the film has ≤ 1 pinhole/m² according to EN13676:2001 when being uncoated and having a grammage of 10-60 gsm.

A free-standing film obtained by the method according to the present disclosure may be applied to the surface of any one of a paper product and a board product.

The nanocellulose film can also be part of a flexible packaging material, such as a free-standing pouch or bag, which may be transparent or translucent. Thus, the nanocellulose film according to the present disclosure may be used as bag material in boxes when packaging dry food such as cereals. Furthermore, the nanocellulose film according to the present disclosure may be used as a wrapping substrate, as a laminate material in paper, paperboard or plastics and/or as a substrate for disposable electronics. The nanocellulose film may also be included in for example a closure, a lid or a label. The nanocellulose film can be incorporated into any type of package, such as a box, bag, a wrapping film, cup, container, tray, bottle etc.

Nanocellulose comprises partly or totally fibrillated cellulose or lignocellulose fibers. The liberated fibrils have a diameter less than 1000 nm, whereas the actual fibril diameter or particle size distribution and/or aspect ratio (length/width) depends on the source and the manufacturing methods. The smallest fibril is called elementary fibril and has a diameter of approximately 2-4 nm (see *e.g.* Chinga-Carrasco, G., Cellulose fibres, nanofibrils and microfibrils: The morphological sequence of MFC components from a plant physiology and fibre technology point of view, Nanoscale research letters 2011, 6:417*),* while it is common that the aggregated form of the elementary fibrils, also defined as microfibril, is the main product that is obtained when making MFC e.g. by using an extended refining process or pressure-drop disintegration process (Fengel, D., Ultrastructural behavior of cell wall polysaccharides, Tappi J., March 1970, Vol 53, No. 3*).*

There are different synonyms for nanocellulose such as cellulose microfibrils, fibrillated cellulose, nanofibrillated cellulose (NFC), fibril aggregates, nanoscale cellulose fibrils, cellulose nanofibers, cellulose nanofibrils, cellulose microfibers, cellulose fibrils, cellulose nanofilaments, microfibrillar cellulose, microfibrillated cellulose (MFC), microfibril aggregates and cellulose microfibril aggregates.

Various methods exist to make nanocellulose, such as single or multiple pass refining, pre-hydrolysis or enzymatic treatment followed by refining or high shear disintegration or liberation of fibrils.

One or several pre-treatment steps are usually required in order to make nanocellulose manufacturing both energy efficient and sustainable. The cellulose fibers of the pulp to be utilized may thus be pre-treated, for example enzymatically or chemically, for example to hydrolyse or swell the fibers or to reduce the quantity of hemicellulose or lignin. The cellulose fibers may be chemically modified before fibrillation, such that the cellulose molecules contain other (or more) functional groups than found in the original or native cellulose. Such groups include, among others, carboxymethyl (CM), aldehyde and/or carboxyl groups (cellulose obtained by N-oxyl mediated oxidation, for example "TEMPO"), quaternary ammonium (cationic cellulose) or phosphoryl groups. After being modified or oxidized in one of the above-described methods, it is easier to disintegrate the fibers into nanocellulose or nanofibrillar size fibrils.

The nanocellulose may contain some hemicelluloses, the amount of which is dependent on the plant source. Mechanical disintegration of the fibers is carried out with suitable equipment such as a refiner, grinder, homogenizer, colloider, friction grinder, single- or twin-screw extruder, ultrasound sonicator, fluidizer such as microfluidizer, macrofluidizer or fluidizer-type homogenizer. Depending on the nanocellulose manufacturing method, the product might also contain fines, or nanocrystalline cellulose, or other chemicals present in wood fibers or in the papermaking process. The product might also contain various amounts of micron size fiber particles that have not been efficiently fibrillated.

Nanocellulose can be produced from wood cellulose fibers, both from hardwood and softwood fibers. It can also be made from microbial sources, agricultural fibers such as wheat straw pulp, bamboo, bagasse, or other non-wood fiber sources. It is preferably made from pulp including pulp from virgin fiber, e.g. mechanical, chemical and/or thermomechanical pulps. It can also be made from broke or recycled paper. The term nanocellulose includes parenchymal nanocellulose and BNC (bacterial nanocellulose). Nanocellulose can also be obtained from vegetable fibers, e.g. sugar beet or potato based nanocellulose.

The above described definition of nanocellulose includes, but is not limited to, the definition of nanocellulose in the ISO/TS 20477:2017 standard.

### Example

Four different press fabric arrangements were provided according to the following. The pressing felt utilized in some of the press fabric arrangements was a conventional paper machine press felt.

### Press fabric arrangement 1:

A press fabric arrangement comprising: a single layer (thickness: 0.18 mm) of a 107 g/m² satin fabric of polyester multifilament yarns (air permeability 125 l/dm² min, warp density 120 cm⁻¹, weft density 40 cm⁻¹, 5-harness satin weave) on the web-side and a conventional paper machine pressing felt on the backside.

### Press fabric arrangement 2:

A press fabric arrangement comprising: a single layer (thickness: 0.85mm) of a 800 g/m² filter fabric of polyester multifilament yarns (calendered, air permeability 2 l/dm² min, yarn density 14 cm⁻¹, plain weave) on the web-side.

### Press fabric arrangement 3:

A press fabric arrangement comprising: a single layer (thickness: 0.80mm) of a 585 g/m² filter fabric of polypropylene multifilament yarns (calendered, air permeability 2 l/dm² min, yarn density 14 cm⁻¹, plain weave).

### Press fabric arrangement 4:

A press fabric arrangement comprising: a single layer (thickness: 0.80mm) of a 585 g/m² filter fabric of polypropylene multifilament yarns (calendered, air permeability 2 l/dm² min, yarn density 14 cm⁻¹, plain weave) on the web-side and a conventional paper machine pressing felt on the backside.

A suspension comprising 87% nanocellulose and 13% sorbitol based on total dry weight was cast-coated onto a metal support to form a fibrous web. The dry content of the suspension during casting was between 3 and 3.5%. The dry content of the formed fibrous web was raised from 3-3.5% to 5.5-8.5% by impingement drying with hot air in a pre-drying step.

The formed and pre-dried fibrous web was then wet-pressed on the metal support by applying the web side surface of the above mentioned respective press fabric arrangements into contact with the web in different experiments (Experiments 1-6). The web and the respective press fabric arrangement were pressed with a static laboratory pressing equipment. Different solid contents of the web when the respective press fabric arrangement was applied to the web (i.e. brought in contact with the web) and the wet-pressing was started, were utilized in the Experiments as can be seen in the below Table 1 ("Starting solids content"). In addition, different max pressure during press pulse ("Max pressure (bar)") and different solid contents after wet-pressing (dewatering) in the pressing equipment ("End solids content") were utilized in the Experiments as can be seen in the below Table 1.

After finished wet-pressing, additional drying by hot air impingement was applied in order to form the nanocellulose film.

The number of pinholes in the web was counted after wet-pressing (dewatering) and after final drying by visual inspection. In addition, the presence of nanocellulose in the respective press fabric arrangements after dewatering and after final drying was determined by visual inspection.

**TABLE 1**

| Experiment No. | Press fabric arrangement | Max pressure (bar) | Starting solids content (wt-%) | End solids content (wt-%) | Holes in nano-cellulose film | Nano-cellulose in fabric after wet-pressing |
|---|---|---|---|---|---|---|
| 1 | 1 | 19 | 5.1 | 20 | No | No |
| 2 | 1 | 19 | 7.9 | 20 | No | No |
| 3 | 1 | 85 | 5.5 | 53 | No | No |
| 4 | 2 | 19 | 7 | 21 | No | No |
| 5 | 3 | 19 | 9 | 21 | Minor | No |
| 6 | 4 | 19 | 12.6 | 22 | No | No |

As can be seen from the results in Table 1 it was possible to utilize a press fabric arrangement with a woven layer on the web-side (i.e. a woven surface structure on the web-side) and apply pressure to reduce a large amount of water of a cast-coated nanocellulose web and still be able to produce a nanocellulose film with good barrier properties. In addition, clogging of the press fabric arrangement was avoided.

## Claims

1. A method for producing a film comprising nanocellulose, wherein the method comprises the steps of:
- providing a suspension comprising between 50 weight-% to 100 weight-% of nanocellulose based on total dry weight,
- forming a fibrous web of said suspension on a non-porous support, wherein said formed fibrous web has a dry content of 1-25% by weight,
- providing a press fabric having a web-side first surface and an opposite second surface, wherein said press fabric comprises at least a woven first fabric layer, wherein said woven first fabric layer is woven of a plurality of yarns, and wherein said woven first fabric layer is arranged in the press fabric as a layer providing said web-side first surface such that said press fabric has a woven surface structure at said web-side first surface,
- applying said web-side first surface of said press fabric into direct contact with said fibrous web,
- wet-pressing said fibrous web by conducting said fibrous web, arranged between said press fabric and said non-porous support, through a pressing equipment, so as to form a dewatered web, and
- drying the dewatered web so as to form said film.

2. The method according to claim 1, wherein said plurality of yarns comprises polymeric yarns.

3. The method according to claim 2, wherein said plurality of yarns comprises polymeric yarns of at least one synthetic polymer selected from the group of synthetic polymers consisting of: polyamides, polyurethanes, polyesters, polyaramides, polyimides, polyolefins, polyether ketones, polypropylene, polyethylene terephthalate (PET), polyethers, polybutylene terephthalate (PBT), polyurea and copolymers thereof.

4. The method according to claim 3, wherein said plurality of polymeric yarns comprises polyester yarns or polypropylene yarns.

5. The method according to claim 3, wherein said plurality of polymeric yarns comprises at least yarns of a first synthetic polymer and yarns of a second synthetic polymer, wherein said first and second synthetic polymers are selected from said group of synthetic polymers.

6. The method according to claim 5, wherein said plurality of polymeric yarns comprises polyester yarns and polypropylene yarns.

7. The method according to any one of the preceding claims, wherein at least 80% of the yarns, preferably at least 90% of the yarns, are polyester yarns or polypropylene yarns.

8. The method according to any one of the preceding claims, wherein the weave pattern of said woven first fabric layer is satin weave, plain weave or twill weave.

9. The method according to any one of the preceding claims, wherein said plurality of yarns are multifilament yarns.

10. The method according to any one of the preceding claims, wherein said woven first fabric layer is woven of yarns having a denier less than 6000, preferably less than 5000, most preferably less than 4000, and wherein said woven first fabric layer has a weft density of more than 5 cm⁻¹, preferably more than 10 cm⁻¹, more preferably more than 15 cm⁻¹, most preferably more than 20 and a warp density of more than 20 cm⁻¹, preferably more than 30 cm⁻¹, more preferably more than 40 cm⁻¹.

11. The method according to any one of the preceding claims, wherein a supportive arrangement is arranged on said second surface of said press fabric, wherein the supportive arrangement comprises one or more supportive fabrics and/or one or more press felts.

12. The method according to claim 11, wherein the supportive arrangement consists of a press felt.

13. The method according to any one of the preceding claims, wherein said fibrous web is formed by casting.

14. The method according to any one of the preceding claims, wherein said non-porous support is a metal support or a plastic support.

15. The method according to claim 14, wherein said metal support is a metal belt.

16. The method according to any one of the preceding claims, wherein said fibrous web has a dry content of 3-25% by weight when entering said wet-pressing.

17. The method according to any one of the preceding claims, wherein said fibrous web has a dry content of 15-80% by weight after dewatering in said pressing equipment.

18. The method according to any one of the preceding claims, wherein said method further comprises a step of smoothing of said dewatered web in a smoothing press.

## Patentansprüche

1. Verfahren zur Herstellung einer Folie, die Nanocellulose umfasst, wobei das Verfahren die folgenden Schritte umfasst:
- Bereitstellen einer Suspension, die zwischen 50 Gew.-% und 100 Gew.-% Nanocellulose, basierend auf dem Gesamttrockengewicht, umfasst,
- Bilden einer Faserbahn aus der Suspension auf einem nicht porösen Träger, wobei die gebildete Faserbahn einen Trockengehalt von 1-25 Gew.-% aufweist,
- Bereitstellen eines Pressgewebes, das eine bahnseitige erste Oberfläche und eine gegenüberliegende zweite Oberfläche aufweist, wobei das Pressgewebe mindestens eine gewebte erste Gewebeschicht umfasst, wobei die gewebte erste Gewebeschicht aus einer Vielzahl von Garnen gewebt ist und wobei die gewebte erste Gewebeschicht in dem Pressgewebe als eine Schicht angeordnet ist, die die bahnseitige erste Oberfläche so bereitstellt, dass das Pressgewebe eine gewebte Oberflächenstruktur an der bahnseitigen ersten Oberfläche aufweist,
- Aufbringen der bahnseitigen ersten Oberfläche des Pressgewebes in direkten Kontakt mit der Faserbahn,
- Nasspressen der Faserbahn durch Leiten der Faserbahn, zwischen dem Pressgewebe und dem nicht porösen Träger angeordnet, durch eine Pressvorrichtung, um eine entwässerte Bahn zu bilden, und
- Trocknen der entwässerten Bahn, um die Folie zu bilden.

2. Verfahren nach Anspruch 1, wobei die Vielzahl von Garnen Polymergarne umfasst.

3. Verfahren nach Anspruch 2, wobei die Vielzahl von Garnen Polymergarne aus mindestens einem synthetischen Polymer umfasst, das aus der Gruppe von synthetischen Polymeren ausgewählt ist, die aus Polyamiden, Polyurethanen, Polyestern, Polyaramiden, Polyimiden, Polyolefinen, Polyetherketonen, Polypropylen, Polyethylenterephthalat (PET), Polyethern, Polybutylenterphthalat (PBT), Polyurea und Copolymeren davon besteht.

4. Verfahren nach Anspruch 3, wobei die Vielzahl von Polymergarnen Polyestergarne oder Polypropylengarne umfasst.

5. Verfahren nach Anspruch 3, wobei die Vielzahl von Polymergarnen mindestens Garne aus einem ersten synthetischen Polymer und Garne aus einem zweiten synthetischen Polymer umfasst, wobei das erste und das zweite synthetische Polymer aus der Gruppe von synthetischen Polymeren ausgewählt sind.

6. Verfahren nach Anspruch 5, wobei die Vielzahl von Polymergarnen Polyestergarne und Polypropylengarne umfasst.

7. Verfahren nach einem der vorhergehenden Ansprüche, wobei mindestens 80 % der Garne, vorzugsweise mindestens 90 % der Garne, Polyestergarne oder Polypropylengarne sind.

8. Verfahren nach einem der vorhergehenden Ansprüche, wobei das Webmuster der gewebten ersten Gewebeschicht eine Satinbindung, eine Leinwandbindung oder eine Köperbindung ist.

9. Verfahren nach einem der vorhergehenden Ansprüche, wobei die Vielzahl von Garnen Multifilamentgarne sind.

10. Verfahren nach einem der vorhergehenden Ansprüche, wobei die gewebte erste Gewebeschicht aus Garnen mit einem Denier von weniger als 6000, vorzugsweise weniger als 5000, am meisten bevorzugt weniger als 4000, gewebt ist und wobei die gewebte erste Gewebeschicht eine Schussdichte von mehr als 5 cm⁻¹, vorzugsweise mehr als 10 cm⁻¹, besonders bevorzugt mehr als 15 cm⁻¹, am meisten bevorzugt mehr als 20 und eine Kettdichte von mehr als 20 cm⁻¹, bevorzugt mehr als 30 cm⁻¹, besonders bevorzugt mehr als 40 aufweist.

11. Verfahren nach einem der vorhergehenden Ansprüche, wobei eine Stützanordnung auf der zweiten Oberfläche des Pressgewebes angeordnet ist, wobei die Stützanordnung ein oder mehrere Stützgewebe und/oder einen oder mehrere Pressfilze umfasst.

12. Verfahren nach Anspruch 11, wobei die Stützanordnung aus einem Pressfilz besteht.

13. Verfahren nach einem der vorhergehenden Ansprüche, wobei die Faserbahn durch Gießen hergestellt ist.

14. Verfahren nach einem der vorhergehenden Ansprüche, wobei der nicht poröse Träger ein Metallträger oder ein Kunststoffträger ist.

15. Verfahren nach Anspruch 14, wobei der Metallträger ein Metallband ist.

16. Verfahren nach einem der vorhergehenden Ansprüche, wobei die Faserbahn zu Beginn des Nasspressens einen Trockengehalt von 3-25 Gew.-% aufweist.

17. Verfahren nach einem der vorhergehenden Ansprüche, wobei die Faserbahn nach dem Entwässern in der Pressvorrichtung einen Trockengehalt von 15-80 Gew.-% aufweist.

18. Verfahren nach einem der vorhergehenden Ansprüche, wobei das Verfahren ferner einen Schritt des Glättens der entwässerten Bahn in einer Glättpresse umfasst.

## Revendications

1. Procédé de production d'un film comprenant de la nanocellulose, dans lequel le procédé comprend les étapes consistant à :
- fournir une suspension comprenant entre 50 % en poids à 100 % en poids de nanocellulose sur la base du poids sec total,
- former une toile fibreuse de ladite suspension sur un support non poreux, dans lequel ladite toile fibreuse formée a une teneur en matière sèche de 1 à 25 % en poids,
- fournir un tissu de presse ayant une première surface côté toile et une deuxième surface opposée, dans lequel ledit tissu de presse comprend au moins une première couche de tissu tissée, dans lequel ladite première couche de tissu tissée est tissée d'une pluralité de fils, et dans lequel ladite première couche de tissu tissée est agencée dans le tissu de presse comme une couche fournissant ladite première surface côté toile de sorte que ledit tissu de presse a une structure de surface tissée au niveau de ladite première surface côté toile,
- appliquer ladite première surface côté toile dudit tissu de presse en contact direct avec ladite toile fibreuse,
- presser par voie humide de ladite toile fibreuse en conduisant ladite toile fibreuse, agencée entre ladite toile de presse et ledit support non poreux, à travers un équipement de presse, de manière à former une toile déshydratée, et
- sécher la toile déshydratée de manière à former ledit film.

2. Procédé selon la revendication 1, dans lequel ladite pluralité de fils comprend des fils polymères.

3. Procédé selon la revendication 2, dans lequel ladite pluralité de fils comprend des fils polymères de l'au moins un polymère synthétique choisi dans le groupe des polymères synthétiques constitué par : les polyamides, les polyuréthanes, les polyesters, les polyaramides, les polyimides, les polyoléfines, les polyéthercétones, le polypropylène, le polyéthylène téréphtalate (PET), les polyéthers, le polybutylène téréphtalate (PBT), la polyurée et des copolymères de ceux-ci.

4. Procédé selon la revendication 3, dans lequel ladite pluralité de fils polymères comprend des fils de polyester ou des fils de polypropylène.

5. Procédé selon la revendication 3, dans lequel ladite pluralité de fils polymères comprend au moins des fils d'un premier polymère synthétique et des fils d'un deuxième polymère synthétique, dans lequel lesdits premier et deuxième polymères synthétiques sont choisis dans ledit groupe de polymères synthétiques.

6. Procédé selon la revendication 5, dans lequel ladite pluralité de fils polymères comprend des fils de polyester et des fils de polypropylène.

7. Procédé selon l'une quelconque des revendications précédentes, dans lequel au moins 80 % des fils, de préférence au moins 90 % des fils, sont des fils de polyester ou des fils de polypropylène.

8. Procédé selon l'une quelconque des revendications précédentes, dans lequel le motif de tissage de ladite première couche de tissu tissé est un tissage satin, un tissage uni ou un tissage sergé.

9. Procédé selon l'une quelconque des revendications précédentes, dans lequel ladite pluralité de fils sont des fils multifilaments.

10. Procédé selon l'une quelconque des revendications précédentes, dans lequel ladite première couche de tissu tissée est tissée de fils ayant un denier inférieur à 6 000, de préférence inférieur à 5 000, de manière préférée entre toutes inférieur à 4 000, et dans lequel ladite première couche de tissu tissée a une densité de trame de plus de 5 cm⁻¹, de préférence de plus de 10 cm⁻¹, de manière davantage préférée de plus de 15 cm⁻¹, de manière préférée entre toutes de plus de 20 et une densité de chaîne de plus de 20 cm-1, de préférence de plus de 30 cm⁻¹, de manière davantage préférée de plus de 40 cm⁻¹.

11. Procédé selon l'une quelconque des revendications précédentes, dans lequel un agencement de support est agencé sur ladite deuxième surface dudit tissu de presse, dans lequel l'agencement de support comprend un ou plusieurs tissus de support et/ou un ou plusieurs feutres de presse.

12. Procédé selon la revendication 11, dans lequel l'agencement de support est constitué d'un feutre de presse.

13. Procédé selon l'une quelconque des revendications précédentes, dans lequel ladite toile fibreuse est formée par coulage.

14. Procédé selon l'une quelconque des revendications précédentes, dans lequel ledit support non poreux est un support métallique ou un support plastique.

15. Procédé selon la revendication 14, dans lequel ledit support métallique est une courroie métallique.

16. Procédé selon l'une quelconque des revendications précédentes, dans lequel ladite toile fibreuse a une teneur en matières sèches de 3 à 25 % en poids lorsqu'elle entre dans ladite presse humide.

17. Procédé selon l'une quelconque des revendications précédentes, dans lequel ladite toile fibreuse a une teneur en matières sèches de 15 à 80 % en poids après déshydratation dans ledit équipement de presse.

18. Procédé selon l'une quelconque des revendications précédentes, dans lequel ledit procédé comprend en outre une étape de lissage de ladite toile déshydratée dans une presse de lissage.
